# EUROPEAN PATENT APPLICATION

(11) **EP 2 090 983 A1**
(43) Date of publication of application: **19.08.2009**
(21) Application number: 08101680.0
(22) Date of filing: 15.02.2008
(51) Int. Cl.: G06F 9/45, G06F 9/50

(54) **Determining an architecture for executing code in a multi architecture environment**

(71) Applicant: SIEMENS AKTIENGESELLSCHAFT, 80333 München (DE)
(72) Inventor: Agneeswaran, Vijay, 560034 Bangalore (IN); Daniel Donny, 560034 Bangalore (IN); Goganovic Ljubisa, 560091 Bangalore (IN); Malakar Ranajoy, 560068 Bangalore (IN); Nagappa Yogesh, 560078 Bangalore (IN)

(57) **Abstract**

The present invention relates to executing user codes in a multi architecture environment, in particular determining an optimized architecture for executing code in a multi architecture environment. The method involves selecting at least one section (2, 3) from a user code (1) and then generating a compiled file (7) of the user code (1) having executable codes (8, 9, 10) of the section (2, 3) for a plurality of architectures (12, 13, 14) at compile time. The method further estimates a cost information for the execution of the executable codes (8, 9, 10) for the plurality of architectures (12, 13, 14). Then at run time a load information is determined for the architectures using a monitoring module (11). Finally an optimized architecture and the respective executable code for executing the section is determined using the cost information for the executable codes (8, 9, 10) and the load information for the architectures (12, 13, 14).

## Description

The present invention relates to executing user codes in a multi architecture environment, in particular determining an optimized architecture for executing code in a multi architecture environment.

Multi architecture environments typically consist of several diverse architectures, such as graphics processing units (GPUs), cell processors as well as other multi-core processors. GPUs offer significant performance improvements to specific computations due to the pipelined architecture. However load balancing in multi architecture environments becomes an arduous task.

The object of the present invention is to improve user code execution in a multi architecture environment.

This object is achieved by a method of determining an architecture for executing code in a multi architecture environment comprising the steps of:
at compile time:
   (a) selecting at least one section from a user code;
   (b) generating a compiled file of the user code having executable codes of the section for a plurality of architectures;
   (c) estimating a cost information for the execution of the executable codes for the plurality of architectures; and at run time:
   (d) determining a load information for the architectures using a monitoring module; and
   (e) determining an optimized architecture and the respective executable code for executing the section using the cost information for the executable code and the load information for the architecture.

This object is achieved by a system for determining an architecture for executing code in a multi architecture environment comprising:
(a) means for selecting at least one section from a user code;
(b) a multi architecture compiler generating a compiled file of the user code having executable codes of the section for a plurality of architectures;
(c) means for estimating a cost information for the execution of the executable codes for the plurality of architectures at compile time;
(d) a monitoring module for determining a load information for the architectures at run time; and
(e) a matching module for determining an optimized architecture and the respective executable code for executing the section using the cost information for the executable code and the load information for the architecture at run time.

The underlying idea of the invention is to generate architecture specific executable codes for a specific section of the user code at compile time and finding an optimized architecture for that section using the cost information for the executable code and the load information for the architecture at run time. This results in significant improvements in running the user code over various architectures without requiring advanced knowledge of these architectures.

In a preferred embodiment of the invention, determining the optimized architecture further comprises the step of invoking the respective executable code of the section at run time. This facilitates the execution of the execution code specific only to the optimized architecture. This helps to achieve significant improvements in execution time.

In a further preferred embodiment, the respective executable code is invoked using a request for scheduling. The request for scheduling is incorporated in the compiled file and during runtime said request initiates the invocation of the execution codes for the optimized architecture.

In an alternate embodiment, the cost information is a measure of a plurality of resources needed to run the executable codes. This enables to estimate the amount of resources needed for running the executable code.

In a further environment, the load information is a measure of a plurality of resources available with the architectures to run the executable codes. This enables proper load scheduling for the plurality of architectures thereby facilitating to run the executable code using the optimal architecture.

The present invention is further described hereinafter with reference to illustrated embodiments shown in the accompanying drawings, in which:
FIG 1 shows a block diagram to find an optimized architecture for a selected section in the user code, and
FIG 2 shows a flowchart illustrating how an optimized architecture is determined in a multi architecture environment.

Before describing the method of determining an optimized architecture, the terminology used herein is explained. "Section" is a portion of the user code which is adapted to perform a specific task, for example a graphic intensive task which could be executed better if run in a GPU.

Computer Processing Units (CPU) performance improves each year and the limits seem to have been reached, with the trend now pointing to more processing units being put into the same die. This has resulted in various new architectures such as the Graphics Processing Units (GPUs), the cell processor as well as other multi-core processors. GPUs offer significant performance improvements to specific computations due to its pipelined architecture. If the programmer knew the details of the available architecture, he could write or rewrite his program for it. However, if there are multiple architectures that are available at any point of time, there is no easy way for the programmer to take advantage of all of them for a single problem and take care of load balancing the various machines.

Load balancing is a critical issue in cluster computing and in grid computing. Load balancing solutions exist which load balance among a set of single-CPU desktop machines, possibly heterogeneous in architectures/operating systems. However, these approaches have not addressed the case of load balancing when each machine has multiple heterogeneous computing resources like multi-core CPUs, GPUs, and specialized processors like the cell.

Load balancers that work across the GPU and CPU based on Just-In-Time (JIT) compilation exist. JIT essentially compiles the source code only at runtime, resulting in a huge performance hit. In conclusion, a single task load balanced across multiple architectures without using JIT techniques has not been addressed.

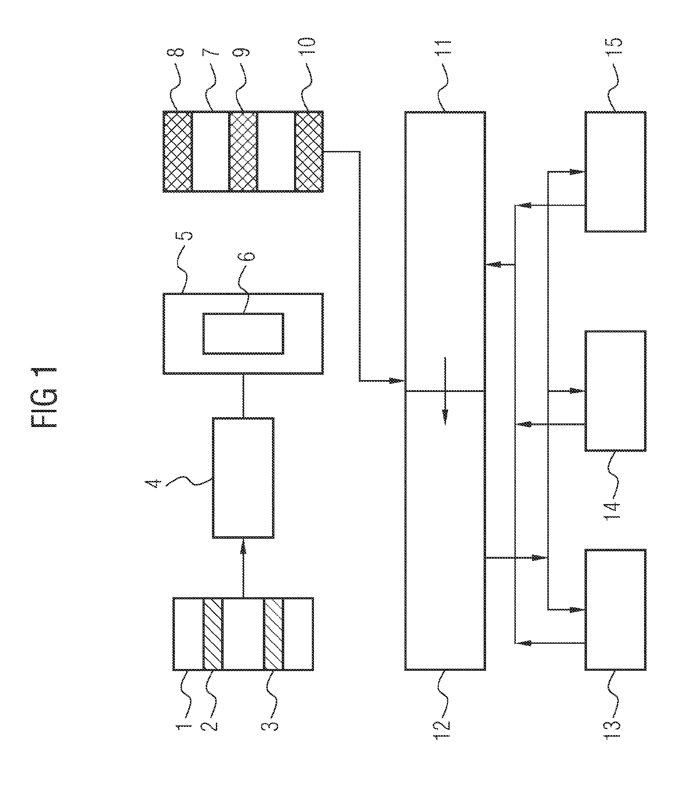

FIG 1 shows a block diagram to find an optimized architecture for a selected section in the user code. The system helps in determining an optimized architecture for executing code in a multi architecture environment. The means 4 is used for selecting the sections 2, 3 from a user code 1. These sections can be written using dedicated libraries or compiler hints (like OpenMP). A multi architecture compiler 5 generates a compiled file 7 of the user code 1. For the section 2 the compiled file 7 consists of executable codes 8, 9, 10 for different architectures 13, 14, 15. The architecture could be a GPU architecture, Multi-core CPU architecture, specialized co-processor architecture etc. The system needs to find the optimized architecture for executing the section 2. Then cost information for the execution of the executable codes 8, 9, 10 for the plurality of architectures 13, 14, 15 are estimated at compile time using a means 6. The cost information is a measure of a plurality of resources needed to run the executable codes. The resources could be the registers, memory, processor time etc associated with the architectures. On analyzing source code, it is possible to extract estimates on the amount of resources the code would require at runtime. For example, if the code operates on an array of hundred, 32-bit numbers, it can be concluded that it would require at minimum, 32*100 bits = 400 bytes of memory.

Therefore, we conclude that the memory cost of the said piece of code is 400 bytes. The Multi-Architecture Compiler 5 takes care of simultaneously compiling the code for the various architectures that are to be targeted. The compiled source results in object file that contain actual executable code for each targeted architecture. This ensures that at runtime, no time is lost for Just-In-Time compilation, and will ensure better performance. The cost analysis (for example through static code analysis methods) done by the compiler provides better information for more accurate scheduling of architectures. In addition, said compiled code is prefaced by a request for scheduling to an optimized architecture. At runtime, this request initiates the mechanism for determining the optimal architecture for the execution of the said section. A monitoring module 11 is used for determining load information for the architectures at run time. The load information is a measure of a plurality of resources available with the architectures to run the executable codes. For example, the various computational resources available to a program at runtime include the processor, memory and input/output devices like disk and network. It contents for these resources along with other programs concurrently running on an operating system. The number of other contenders, and how much computational resources they occupy affect the performance of the said program. For each resource, it is possible to determine how much of the resource is available for programs. For example, if the currently running programs have working sets of 200 MB in a 256 MB Random Access Memory (RAM) machine, a new program can only have 50 MB of working set at maximum before performance begins to degrade. Therefore, we can conclude that the runtime load on the system memory is (200/256)*100 = 78.125 % loaded. This stage receives feedback from the available hardware about load conditions and availability. A matching module 12 is used for determining an optimized architecture and the respective executable code for executing the section using the cost information for the executable codes (8, 9, 10) and the load information for the architectures (13, 14, 15) at run time. This is done by comparing the load information with cost estimates generated during the compilation stage. This results in deciding the best computation resource for the code. The section 2 may be decided to be run upon an architecture which currently is having less load. For example if the section 2 pertains to a graphic intensive task, then the method results in selecting a GPU having currently the least load.

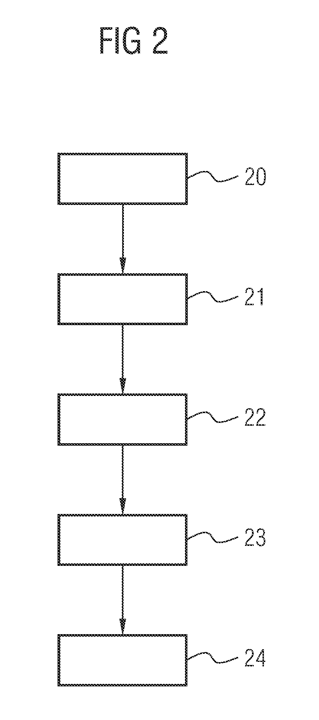

FIG 2 shows a flowchart illustrating how an optimized architecture is determined in a multi architecture environment. The method is used for determining an architecture for executing code in a multi architecture environment. The method involves selecting at least one section from a user code (step 20) and generating a compiled file (step 21) of the user code having executable codes of the section for a plurality of architectures. At step 22 cost information for the execution of the executable codes for the plurality of architectures are estimated at compile time. At run time, the monitoring module determines a load information for the architectures (step 23) and finally determines an optimized architecture (step 24) and the respective executable code for executing the section using the cost information for the executable code and the load information for the architecture.

Summarizing, the invention deals with generating architecture specific executable codes for specific sections of the user code at compile time and finding an optimized architecture using the cost information for the executable code and the load information for the architecture at run time.

The key benefits of the approach include:
It helps a programmer to achieve significant improvements (speedups) in the program over the various hardware architectures without requiring advanced knowledge of these architectures.
It can adapt to varying numbers and loads of resources since the load balancing is performed based on runtime resource information.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the spirit or scope of the present invention as defined.

## Claims

1. A method of determining an architecture for executing code in a multi architecture environment comprising the steps of: at compile time:
(a) selecting at least one section (2, 3) from a user code (1);
(b) generating a compiled file (7) of the user code (1) having executable codes (8, 9, 10) of the section (2, 3) for a plurality of architectures (12, 13, 14);
(c) estimating a cost information for the execution of the executable codes(8, 9, 10) for the plurality of architectures (12, 13, 14);
and at run time:
(d) determining a load information for the architectures using a monitoring module (11); and
(e) determining an optimized architecture and the respective executable code for executing the section using the cost information for the executable codes (8, 9,10) and the load information for the architectures (12, 13, 14).

2. The method according to claim 1, wherein determining the optimized architecture further comprises the step of invoking the respective executable code of the section at run time.

3. The method according to claim 2, wherein the respective executable code is invoked using a request for scheduling.

4. The method according to any of the preceding claims, wherein the cost information is a measure of a plurality of resources needed to run the executable codes.

5. The method according to any of the preceding claims, wherein the load information is a measure of a plurality of resources available with the architectures to run the executable codes.

6. A system for determining an architecture for executing code in a multi architecture environment comprising:
(a) means (4) for selecting at least one section (2, 3)from a user code (1) ;
(b) a multi architecture compiler (5) generating a compiled file (7) of the user code (7) having executable codes (8,9,10) of the section (2, 3) for a plurality of architectures (13, 14,15);
(c) means (5) for estimating a cost information for the execution of the executable codes (8, 9, 10) for the plurality of architectures at compile time;
(d) a monitoring module (11) for determining a load information for the architectures at run time; and
(e) a matching module (12) for determining an optimized architecture and the respective executable code for executing the section using the cost information for the executable codes (8, 9, 10) and the load information for the architectures (13, 14, 15) at run time.

7. The system according to claim 6, wherein the matching module invokes the respective executable code of the section at run time.

8. The system according to claim 7, wherein the respective executable code is invoked using a request for scheduling.

9. The system according to any of claims 6 to 8, wherein the cost information is a measure of a plurality of resources needed to run the executable codes.

10. The system according to any of claims 6 to 9, wherein the load information is a measure of a plurality of resources available with the architectures to run the executable codes.
